# EUROPEAN PATENT APPLICATION

(11) **EP 1 695 622 A2**
(43) Date of publication of application: **30.08.2006**
(21) Application number: 06003398.2
(22) Date of filing: 20.02.2006
(51) Int. Cl.: A01N 31/02, A01N 25/18, A01N 59/00, A01N 59/04, A01N 37/36

(54) **Method and compositions for attracting mosquitoes employing (R)-(+)-isomers of 1-alkyn-3-ols**

(30) Priority: 25.02.2005 US 656222 P
(71) Applicant: Bedoukian Reseach Inc., Danbury, CT 06810-4192 (US)
(72) Inventor: Bedoukian, Robert H., West Redding Connecticut 06896 (US)
(74) Representative: Vossius & Partner

(57) **Abstract**

The predominately (R)-(+) isomer of 1-alkyn-3-ol compounds of the formula: 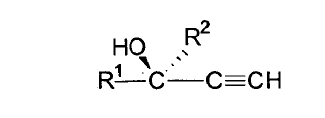 where R¹ is a saturated aliphatic hydrocarbon group containing from 1 to about 12 carbon atoms, and R² is hydrogen, are most effective attractants for mosquitoes.

## Description

### Related Applications

This application claims priority from United States Provisional Patent Application No. 60/656,222, filed February 25, 2005.

### Field of the Invention

This invention relates to a method and compositions for attracting mosquitoes so that they may be captured and/or killed. More particularly, the invention relates to the use of certain compounds in compositions and apparatus to more effectively attract mosquitoes.

### Background to the Invention

Compounds, compositions and formulations for protecting human beings from being bitten by mosquitoes are known in the art. Generally, these compounds, compositions and formulations are based on their ability to persist on the skin of the person upon topical or surface application for a time sufficient to repel mosquitoes, or are based on their ability to attract mosquitoes to a remote location so that the mosquitoes may be captured and/or killed so that they are unable to bite human beings or other animals. However, despite the various attempts to improve the attractant activity of the known mosquito attractants, these attempts have generally not been successful, as almost anyone who has used such mosquito attractants can attest.

A device for attracting and destroying mosquitoes is disclosed in U.S. Patent No. 5, 799,436 of James Nolen et al. The attractant used in the device disclosed in this patent is octenol (1-octen-3-ol) used in combination with heat and carbon dioxide.

Recently, in US Patent Application No. 09/752,704, filed December 28, 2000, now US Patent No. 6,866,858, issued March 15, 2005, it was suggested that 1-alkyn-3-ols of the formula: 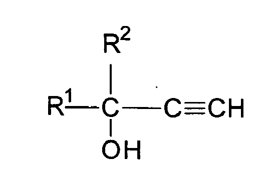 wherein R¹ is a saturated aliphatic hydrocarbon group containing from 1 to about 12 carbon atoms, and R² is hydrogen, preferably hydrogen are especially effective as attractants for mosquitoes. However, the 1-alkynol-3-ol compounds utilized in the experiments described in that application were racemic mixtures (the precisely 50:50 mixtures of R and S- enantiomers produced by standard methods of synthesis) of the 1-alkyn-3-ol compounds that the inventors of that application obtained from the present inventor's company, Bedoukian Research, Inc.

The field has been searching for new and more effective attractants for mosquitoes. However, the search for more effective mosquito attractants has not generally been met with adequate success since most mosquito attractants have been found only to possess a limited degree of attractance activity and are generally not sufficiently effective. There is, therefore, a need for more effective means to attract mosquitoes in order to prevent the mosquitoes from locating and biting humans and other targets such as livestock. Moreover, this need has recently become more acute and urgent because mosquitoes have been discovered to be carriers of significant diseases that can be passed on to a target by the mosquitoes biting the target. A further need is to be able to reduce the use of environmentally unfriendly pesticides.

### Summary of the Invention

The inventor has discovered that predominately the (R)-(+) isomers of the 1-alkyn-3-ols are unexpectedly superiorly useful in compositions and formulations and in methods and apparatus for attracting mosquitoes. When an effective amount of the attractant compound(s) is/are deployed in a three dimensional atmospheric space the compound(s) more effectively attract mosquitoes so they can be captured and/ or killed.

According to this invention, 1-alkyn-3-ols compounds that are predominately the (R)-(+) isomers of 1-alkyn-3-ols of the formula: 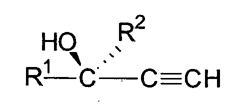 wherein R¹ is a saturated aliphatic hydrocarbon group containing from 1 to about 12 carbon atoms, and R² is hydrogen are especially effective as attractants for mosquitoes. Preferably, R¹ is C₅H₁₁.

The attractant compound can be dispensed into three dimensional atmospheric space by any suitable means sufficient to provide an attracting effective amount of the attractant compound(s). Such dispensing means includes, for example, evaporation, atomization and ionic dispersion of the attractant compound from any suitable composition or formulation and apparatus. Such composition or formulation will generally comprise a base vehicle containing at least one of the attractant compounds.

### Detailed Description of the Invention

The inventor has discovered that when an effective amount of at least one attractant 1-alkyn-3-ols compound that is predominately the (R)-(+) isomers 1-alkyn-3-ols of the formula: 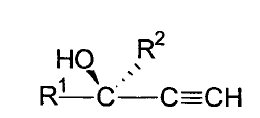 wherein R¹ is a saturated aliphatic hydrocarbon group containing from 1 to about 12 carbon atoms, and R² is hydrogen, is dispensed into the atmosphere of a three-dimensional environmental space, mosquitoes are more effectively attracted to the attractant compound and are more susceptible to being captured and/or killed.

Any predominately (R)-(+) isomer of 1-alkyn-3-ols of the formula: 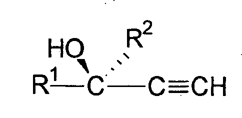 wherein R¹ and R² are as defined hereinbefore may be employed in the method, compositions and apparatus of this invention. Preferred suitable inhibiting compounds are, for example, the (R)-(+) isomers of 1-butyn-3-ol, 1-pentyn-3-ol, 1-hexyn-3-ol, 1-heptyn-3-ol, 1-octyn-3-ol, 1-nonyn-3-ol, 1-decyn-3-ol, 1-undecyn-3-ol, and most preferably the (R)-(+) isomer of 1-octyn-3-ol. Depending on the particular mosquito species, a particular (R)-(+) isomer of an 1-alkyn-3-ol may provide the most effective release rate and/or be more effective and be preferred for that species of mosquito. The attractant compounds may be utilized singly or as mixtures of two or more of such compounds. Moreover, the attractant compounds of this invention can be utilized in combination with other known mosquito attractants, such as for example, including but not limited to, in combination with ammonia or ammonia producing salt, such as for example ammonium bicarbonate, ammonium carbonate or ammonium lactate, or carbon dioxide and/or heat. By the phrase "predominately the (R)-(+) isomers 1-alkyn-3-ols" it is meant that the (R)-(+) isomers comprise more than about 51 % of the mixture of enantiomeric compounds, and preferably comprise at least about 65% or more, more preferably at least 90%, and most preferably at least 97-100%.

The (R)-(+) isomers 1-alkyn-3-ols of this invention may be obtained from commercial sources, such as for example, from Aldrich Chemical Company of Milwaukee, Wisconsin, Acros Organics division of Fisher Scientific of Pittsburgh, PA and Jülich Fine Chemicals GmbH of Jülich, Germany. The (R) and (S) enantiomers may also be prepared according to the following articles: Asymetric Reduction of α,β-Acetylenic Ketones with β-3-Pinanyl-9-Borabicyclo[3.3.1]nonane: (R)-(+)-1-Octyn-3-ol, Organic Synthesis, Coll., Vol. 7, p 402; Vol. 63, p 57. Reduction of α,β-Acetylenic Ketones to (S)-Propargyl Alcohols of High Enantiomeric Purity, J. Org. Chem. Vol. 47, 2814-1816 (1982).

Any suitable attracting effective amount of the attractant compound(s) may be employed. Such attracting effective amounts will generally range from about 0.002 mg/hr to about 40 mg/hr, preferably from about 0.01 to about 10 10 mg/hr, more preferably from about 0.04 0.01 mg/hr to about 3.55.0 mg/hr, still more preferably from about 0.02 mg/hr to about 2 mg/hr, and most preferably from about 0.02 mg/hr to about 1 mg/hr.

The attractant compound(s) of this invention may be employed in any formulation suitable for dispensing attractant effective amounts of the compounds. The compounds will generally be employed in formulations comprising a suitable vehicle or carrier containing the attractant compounds. For example, the attractant compound can be formulated in a specially formulated waxy medium or vehicle engineered to release desired amounts of vaporous attractant compound at ambient temperatures, such as those waxy mediums or vehicles available from Koster Keunen of Watertown, Connecticut. An example of such a waxy medium available from Koster Keunen is known as Insect Repellent Wax Bar No. 9, which is a blend of waxes having the following general composition: fatty acids ranging in carbon chain length of from C₁₆ to C₂₂, fatty alcohols ranging in carbon chain length of from C₁₆ to C₂₂, paraffinic hydrocarbons ranging in carbon chain length of from C₁₉ to C₄₇, branched hydrocarbons ranging in carbon chain length of from C₂₃ to C₆₉, beeswax and other natural waxes such as candelilla and carnauba. The wax mixture will generally be formulated with concentrations of the attractant compounds of this invention ranging from about 20% to 60% and the formulation has a congealing point which may vary from about 75°C to about 45°C. Altematively, the inhibiting compound can be formulated in a porous medium or vehicle suitable for releasing effective amounts of the attractant compound. As an example of such porous medium or vehicle is a polyester membrane material having micropores encasing a block of inhibiting compound-saturated fibrous material that gradually releases the inhibiting compound so that it permeates the microporous membrane and is released to the environment. Such porous membrane known as World of Fragrance™ cups is available from Waterbury Companies, Inc. of Waterbury, Connecticut. The medium may also be a waxy medium such as a candle or similar paraffin or beeswax type waxy material, or a suitable polymeric material, such as that available from AgriSense-BCS Limited (AgriSense-BCS Limited, Taffs Mead Road, Treforest Industrial Estate, Pontypridd, CF37 5SU UK).

The formulations can be placed in any suitable container or device for dispensing the attractant compound and attracting or trapping mosquitoes. For example, the formulations can be placed in a suitable device so that one can obtain, for example, evaporation of the attractant compound from a porous medium or wax-like medium containing the attractant compound positioned within the dispensing device. As examples of such devices, there can be mentioned the devices disclosed in US Patents Nos. 5,205,064, 5,799,436 and 6,055,706 of BioSensory Insect Control Corporation and James Nolen & Company, each of said patents being incorporated herein by reference thereto. The formulations can also be placed in jar traps such as those that dispense carbon dioxide as an attractant. The formulations can also be placed in "bug zapping" devices for electrocuting the mosquitoes attracted to the device containing the attractant-containing formulation.

Another suitable means of dispensing the attractant compound is by atomization and/or ionic dispersion of the compound as suitable-sized, positively-charged droplets from a suitable atomization or ionic dispersing apparatus, such as the Ionic Wind™ device, available from Brandenburg, Ltd. of Brierery Hill, United Kingdom used in connection with any suitable mosquito trapping device or apparatus.

The attractant compounds of this invention are effective for mosquitoes found in Florida and Connecticut.

The use of the attractant compounds of this invention and their greatly increased attractant property as compared to prior art attractants is illustrated by the following non-limited example.

### Example 1

The following tests were conducted in Connecticut in September 2004. Mosquito traps model 1012 manufactured by John W. Hock Company in Gainesville, Florida were used in these experiments. The traps use a stream of CO₂ directed in the vicinity of a collection bag, with a fan used to blow mosquitoes into the bag. The light supplied with the trap was turned off. The traps were spaced 65-70 feet apart at the edge of a wetland in Danbury, CT, at least 25 feet from any buildings. The (R) and (S)-1-octyn-3-ol was incorporated into a wax lure of the type manufactured by BioSensory, Inc. and placed near a stream of CO₂ which was being released at a rate of approximately 140 ml/minute. The traps were operated from approximately 4:00PM until 9:00AM the next day. Daytime temperatures were 70-75°F during the trials. Average weight loss from the wax lures during the test was approximately 4mg/day, or 0.17 mg/hr. Three traps were used, with either (R)-1-Octyn-3-ol, (S)-1-Octyn-3-ol, or no treatment, rotated among the traps over a three-day cycle. Four complete cycles were performed and the results for each treatment were averaged.

The results of the test were as follows. The traps with no attractant were considered as the baseline catch of mosquitoes and the results of the catches with the isomers were compared to this baseline value. The (R)-(+) isomer of 1-octyn-3-ol captured 120% more mosquitoes than the baseline, whereas the (S)-(-) isomer of 1-octyn-3-ol captured only 65% more mosquitoes than the baseline, demonstrating the unexpected increased effectiveness of the (R)-(+) isomer.

### EXAMPLE 2

Tests were conducted with the Mosquito Magnet Liberty model manufactured by American Biophysics Corp. The traps were spaced 65-70 feet apart at the edge of a wetland in Danbury, CT, at least 25 feet from any buildings. 1 gram of test chemical was added to a clean porous frit of the type normally used in the trap, releasing approximately 1 mg/h. (R)-(+)-1-octyn-3-ol, (S)-(-)-1-octyn-3-ol, (R)-(-)-1-octen-3-ol, and racemic 1-octen-3-ol were rotated twice among four traps over eight days, and the results for each attractant were compared.

The results of these tests were as follows. In this test the trap with the (R)-(+) isomer of 1-octyn-3-ol caught 34% more mosquitoes than the trap with the 50:50 racemic mixture of 1-octen-3-ol, whereas the trap with the (S)-(-) isomer of 1-octyn-3-ol caught 23% less mosquitoes than the trap with the 50:50 racemic mixture of 1-octen-3-ol, again demonstrating the unexpected superior mosquito attracting properties of the (R)-(+) isomer.

### Example 3

In tests performed in Florida using Mosquito Magnet Pro units, (R)-(+)-1-octyn-3-ol was compared with racemic 1-octyn-3-ol and (S)-(-)-1-octyn-3-ol at release rates of approximately 60 mg/day and 500 mg/day. The lures were rotated among the traps and compared to the same traps with no lure, all relative to a control trap. The (S)-(-)-1-octyn-3-ol caught an average of 39% more mosquitoes relative to the control than the traps when no lure was used (18 test days), the racemic 1-octyn-3-ol caught an average of 240% more mosquitoes than did no lure (10 test days), and the (R)-(+)-1-octyn-3-ol caught an average of 334% more mosquitoes than the traps with no lure (16 test days).

With the foregoing description of the invention, those skilled in the art will appreciate that modifications may be made to the invention without departing from the spirit thereof. Therefore, it is not intended that the scope of the invention be limited to the specific embodiments illustrated and described.

## Claims

1. A composition for attracting mosquitoes within a three-dimensional space, said composition comprising:
a) at least one 1-alkyn-3-ol compound which is predominately the (R)-(+) isomer of such 1-alkyn-3-ol compound of the formula: 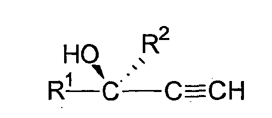 wherein R¹ is a saturated aliphatic hydrocarbon group containing from 1 to about 12 carbon atoms, and R² is hydrogen; and
b) a carrier for the at least one 1-alkyn-3-ol compound.

2. A composition according to claim 1 wherein R¹ is C₅ H₁₁.

3. A composition according to claim 1 or 2 wherein the (R)-(+) isomer comprises at least about 75 wt% of the 1-alkyn-3-ol..

4. A composition according to claim 1 or 2 wherein the (R)-(+) isomer comprises from about 97 to 100 wt% of the 1-alkyn-3-ol.

5. A composition according to claim 1 additionally comprising ammonia or an ammonia producing salt.

6. A composition according to claim 5 wherein the ammonia producing salt is ammonium carbonate, ammonium bicarbonate, or ammonium lactate.

7. A method of attracting mosquitoes within a three-dimensional space comprising releasing within the three-dimensional space an attracting effective amount of at least one 1-alkyn-3-ol compound which is predominately the (R)-(+) isomer of such 1-alkyn-3-ol compound of the formula: 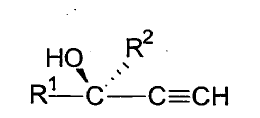 wherein R¹ is a saturated aliphatic hydrocarbon group containing from 1 to about 12 carbon atoms, and R² is hydrogen.

8. The method of claim 7 wherein R¹ is C₅ H₁₁.

9. The method of claim 7 or 8 wherein the attracting effective amount ranges from about 0.002 mg/hr to about 40 mg/hr.

10. The method of claim 7 or 8 wherein the attracting effective amount ranges from about 0.02 mg/hr to about 1.0 mg/hr.

11. The method of claim 7 or 8 wherein ammonia is also released concurrently with the at least one 1-alkyn-3-ol compound which is predominately the (R)-(+) isomer of an 1-alkyn-3-ol.

12. The method of claim 7 or 8 wherein the releasing comprises release by evaporation, atomization or ionic dispersion.

13. The method of claim 7 or 8 wherein carbon dioxide is released concurrently with the at least one 1-alkyn-3-ol compound which is predominately the (R)-(+) isomer of an 1-alkyn-3-ol.

14. An article for use in dispensing an mosquito attracting effective amount of a mosquito attractant comprising an absorbent material having absorbed therein at least one 1-alkyn-3-ol compound which is predominately the (R)-(+) isomer of such 1-alkyn-3-ol compound of the formula: 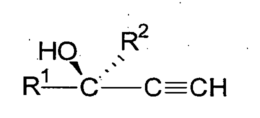 wherein R¹ is a saturated aliphatic hydrocarbon group containing from 1 to 12 carbon atoms and R² is hydrogen.

15. An article according to Claim 14 wherein R¹ is C₅H₁₁.

16. An article according to Claim 14 wherein the absorbent material is a fibrous material, a waxy medium, or a polymer based medium.
